# FASCICULE DE BREVET EUROPEEN

(11) **EP 0 644 644 B1**
(45) Date de publication et mention de la délivrance du brevet: **18.03.1998**
(21) Numéro de dépôt: 94402086.6
(22) Date de dépôt: 20.09.1994
(51) Int. Cl.: H02K 1/24, H02K 3/20, H02K 1/08

(54) **Rotor de machine synchrone**
Rotor synchroner Drehmaschinen
Rotor of synchronous machine

(30) Priorité: 21.09.1993 FR 9311233
(43) Date de publication de la demande: 22.03.1995
(73) Titulaire: GEC ALSTHOM TRANSPORT SA, 75016 Paris (FR)
(72) Inventeur: Masson, André, F-93600 Aulnay Sous Bois (FR)
(74) Mandataire: Fournier, Michel

(56) Documents cités:
- EP-A- 0 096 515
- EP-A- 0 504 093
- WO-A-94/27354
- FR-A- 2 057 147
- FR-A- 2 082 430

## Description

La présente invention porte sur les rotors magnéto-électriques en général et concerne, plus particulièrement, un rotor de machine synchrone.

On connait des documents US 3,321,652 de Lawrence G. Opel et FR 2.057.147 de Norman Klimmek et al. une machine synchrone hétéropolaire à rotor non bobiné et à champ inducteur statique.

L'état de la technique cité décrit un rotor d'une machine synchrone utilisé à grande vitesse.

Un tel rotor doit avoir une grande résistance à la force centrifuge, une grande rigidité de flexion de manière à limiter les vibrations et une grande stabilité mécanique et thermique.

Le rotor, entièrement métallique, est composé de pièces en acier magnétique et en métal amagnétique assemblées entre elles. La surface périphérique du rotor est de préférence lisse et de révolution pour limiter les pertes aérodynamiques.

L'enroulement d'excitation étant au stator, le rotor n'est pas chauffé par cet enroulement. Le rotor n'est donc le siège que de pertes électromagnétiques de surface que l'on cherche à limiter.

L'absence de pertes importantes au rotor confie à celui-ci une stabilité mécanique et thermique d'équilibrage.

Cette machine synchrone réunit de nombreux avantages qui la rendent adaptée pour une utilisation à grande vitesse et/ou à température élevée.

L'enroulement d'excitation fixe, placé au stator, n'est pas soumis aux contraintes de rotation et est donc plus facile à refroidir par gaz ou par liquide. Cet enroulement d'excitation ne nécessite ni bagues ni balais.

Le rotor peut être une seule pièce métallique finale, composée de plusieurs parties les unes magnétiques et l'une ou les autres amagnétique(s) assemblées avec continuité métallique (cas du rotor plein), continuité totale ou importante pour les grandes vitesses, partielle pour les vitesses courantes.

Le rotor n'est pas le siège de pertes issues d'un enroulement d'excitation, et n'a donc pas besoin de canaux de refroidissement.

Le rotor peut être réalisé plein, donc rigide en flexion et de vitesse critique élevée, et résistant à la force centrifuge. Ces deux qualités le rendent apte à tourner à grande vitesse.

Le rotor peut être réalisé avec une surface extérieure lisse et de révolution, dans le but de minimiser les pertes par frottement d'air ou de gaz, ou de liquide dans le cas d'un rotor immergé.

Etant donné que le rotor est monolithique et sans pertes internes, il ne subit pas de distorsions thermiques ni de déplacements d'éléments internes, Il en résulte un équilibrage très stable.

Le rotor est résistant à l'ambiance thermique et peut supporter sans dispositions spéciales des températures pouvant atteindre une valeur de l'ordre de 300°C.

Résistance mécanique, rigidité, monolithisme, stabilité de l'équilibrage contribuent à la grande fiabilité du rotor.

La structure des rotors décrite dans l'état de la technique présente cependant un inconvénient.

Les rotors décrits ont une surface extérieure de révolution lisse dans le but important de réduire les pertes par frottement avec l'air ou un gaz ou un liquide.

Il en résulte que l'entrefer magnétique entre arcs polaires et stator est constant.

Cette machine entre dans la catégorie des machines à pôles saillants. Dans la construction usuelle des rotors à pôles saillants la surface extérieure des pôles faisant face à l'alésage stator laisse entre les surfaces magnétiques un entrefer minimal dans l'axe polaire et à proximité. Les cornes polaires sont arrondies (on ne considère pas ici les variations plus fines causées par les encoches stator et les éventuelles encoches d'amortisseur sur les pôles).

L'entrefer constant du rotor massif à griffe de l'état de la technique n'est pas un inconvénient prépondérant lorsque la machine fonctionne à vide cu peu chargée. Cependant, pour un fonctionnement en charge, l'entrefer présenterait, conformément à un phénomène bien connu des concepteurs de machines à pôles saillants, une concentration du flux magnétique sur un seul bord tangentiel de chaque pôle. Cette concentration est facilitée par l'entrefer constant, alors qu'elle serait atténuée, conformément à l'invention, au moyen de pôles à entrefer progressif, et éventuellement à cornes arrondies ou chanfreinées.

La concentration du flux au bord tangentiel du pôle a les inconvénients principaux suivants :
- Dans la zone de concentration, l'induction est maximale dans le pôle et dans le petit arc de stator qui lui fait face. Lorsque, dans cette zone, les limites des matériaux magnétiques composants le rotor et le stator sont atteintes, ces limites ne sont pas encore atteintes dans les autres zones, il en résulte que la structure n'est pas utilisée de façon efficace. De plus, Ou fait que toutes les dents voient successivement cette induction élevée les pertes fer sont élevées.
- Si on essaie de limiter l'induction des dents stator dans la zone concentrée en augmentant la largeur de toutes les dents, on augmente la massse des dents et on diminue la section disponible pour le bobinage. Dans ce cas la structure est également utilisée de façon inefficace.

Aussi est-ce le mérite du déposant que de proposer une amélioration du rotor sans bobinage ni balais, de la machine synchrone appelée machine à griffe à rotor massif, ou machine RICE-LUNDELL ou machine LUNDELL modifiée.

Le document US 5 053 666 décrit un moteur de l'état de la technique.

Conformément à une caractéristique de l'invention, le rotor de machine synchrone est caractérisé en ce que lesdits pôles dudit rotor sont tels qu'ils définissent avec ledit stator associé un entrefer magnétique progressif et un entrefer aérodynamique constant.

L'invention a également pour objet un rotor de machine synchrone satisfaisant à l'une des caractéristiques suivantes:
- les pôles comportent une face courbe en son centre et plane dans au moins l'une desdites zones d'entrefer magnétique progressif et au moins un bord à angle vif.
- les pôles comportent une face courbe en son centre et plane dans au moins l'une desdites zones d'entrefer magnétique progressif et au moins un bord chanfreiné.
- les pôles comportent une face courbe en son centre et plane dans au moins l'une desdites zones d'entrefer magnétique progressif et au moins un bord arrondi.
- les pôles comportent une face courbe en son centre et dans au moins l'une desdites zones d'entrefer magnétique progressif et au moins un bord à angle vif.
- les pôles comportent une face courbe en son centre et dans au moins l'une desdites zones d'entrefer magnétique progressif et au moins un bord chanfreiné.
- les pôles comportent une face courbe en son centre et dans au moins l'une desdites zones d'entrefer magnétique progressif et au moins un bord arrondi.

L'invention a également pour objet un rotor de machine synchrone dans lequel les pièces de coin sont complétées par des pièces latérales de manière à constituer une spire d'amortissement en un matériau amagnétique et conducteur de l'électricité.

L'amélioration conduit à une augmentation de puissance d'au moins 20% dans le même volume ainsi qu'à une augmentation du rendement.

Il est donc très utile de donner au rotor de la machine à griffe une forme de surface de pôle qui se rapproche des formes classiques de pôles saillants, tout en gardant l'avantage important à grande vitesse procuré par l'entrefer aérodynamique constant.

Un autre avantage du rotor à entrefer progressif selon l'invention est la diminution de la concentration de flux sur le bord tangentiel des pôles, la diminution des pertes et l'augmentation de la puissance pour une masse donnée.

En d'autres termes, pour une machine de volume donné ou de masse donnée on augmente sa puissance et son rendement.

D'autres buts, caractéristiques et avantages du rotor de machine synchrone apparaîtront à la lecture de la description de modes de réalisations préférées de l'invention en se reportant aux dessins joints, dans lesquels:
- les figures 1 à 6 sont des représentations en coupe transversale de pôles à entrefer progressif conformes à l'invention selon différents modes de réalisations; et
- la figure 7 représente une spire d'amortissement en matériau amagnétique conducteur.

Les pôles saillants usuels ont en général un profil symétrique par rapport à l'axe polaire.

Ceci est nécessaire si la machine doit pouvoir fonctionner dans les deux sens de rotation, de manière à pouvoir utiliser l'un ou l'autre des couples fournis, avec les mêmes performances maximales.

Les pôles sont de préférence symétriques même dans des machines à un seul sens de couple. Dans les machines à pôles saillants usuelles, l'entrefer progressif est obtenu par découpage de tôles feuilletées. Les pôles obtenus ne sont alors pas plus coûteux que des pôles à entrefer progressif réalisé d'un seul côté.

Pour les machines à griffe à rotor massif à un sens de couple, comme par exemple les alternateurs avec turbine ou les moto-compresseurs, il est plus économique de réaliser l'entrefer progressif sur le seul côté utile des pôles.

Le rotor de machine synchrone selon l'invention est donc susceptible de comporter un entrefer magnétique progressif réalisé sur un seul côté d'au moins un des pôles.

L'entrefer magnétique progressif est obtenu par usinage des pôles par fraisage, avant ou après leur soudage ou leur assemblage.

La zone centrale de la surface du pôle est laissée à entrefer constant sur un angle donné.

La surface du pôle bordant l'entrefer progressif sera couramment un plan, d'usinage simple, mais il est aussi possible d'usiner une surface cylindrique courbe présentant une variation optimale de l'entrefer en fonction de l'angle.

Le bord du pôle peut être laissé vif, chanfreiné ou arrondi.

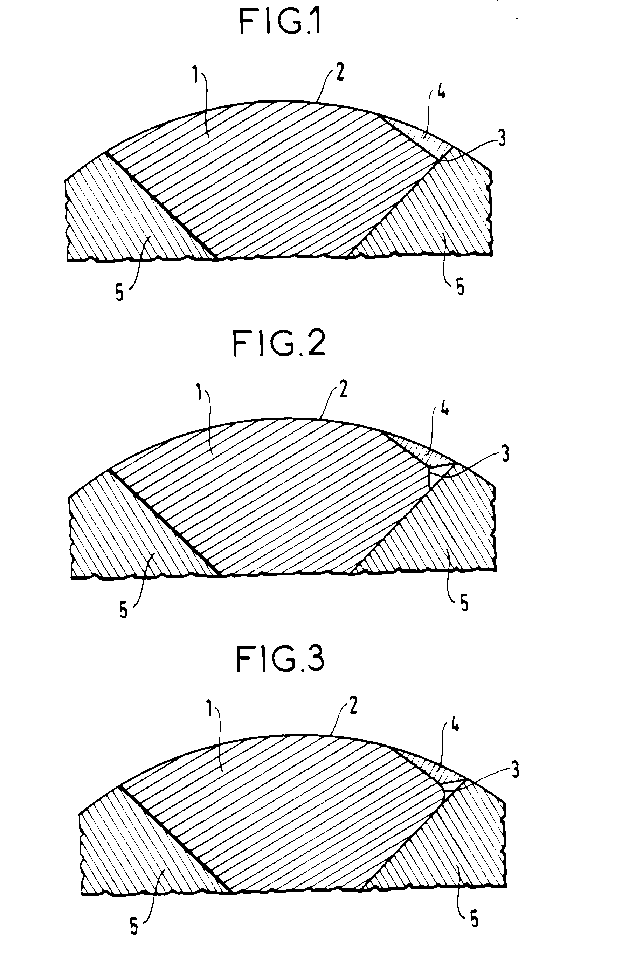

La figure 1 montre plus particulièrement un pôle 1 comportant une face 2 courbe en son centre et plane à l'une de ses extrémités et un bord 3 à angle vif.

La face 2 constitue la zone magnétiquement active du pôle.

Des éléments 4, en métal amagnétique, sont disposés de part et d'autre de cette zone magnétiquement active et plus généralement de part et d'autre du pôle 1.

L'élément 5 est en métal amagnétique remplissant l'espace entre pôles.

La figure 2 montre plus particulièrement un pôle 1 comportant une face 2 courbe en son centre et plane à l'une de ses extrémités et un bord 3 chanfreiné.

La figure 3 montre plus particulièrement un pôle 1 comportant une face 2 courbe en son centre et plane à l'une de ses extrémités et un bord 3 arrondi.

La figure 4 montre plus particulièrement un pôle 1 comportant une face 2 courbe en son centre mais également à ses extrémités et un bord 3 à angle vif.

La figure 5 montre plus particulièrement un pôle 1 comportant une face 2 courbe en son centre mais également à ses extrémités et un bord 3 chanfreiné.

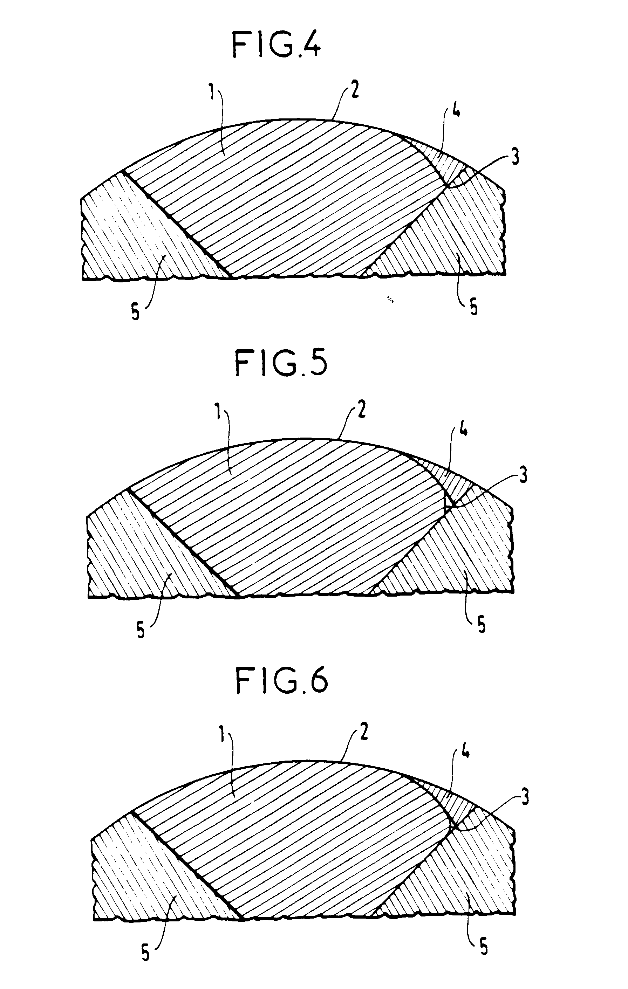

La figure 6 montre plus particulièrement un pôle 1 comportant une face 2 courbe en son centre mais également à ses extrémités et un bord 3 arrondi.

De manière générale et conformément à un premier mode de réalisation de l'invention, les pôles comportent une face courbe en leur centre et plane dans au moins l'une desdites zones d'entrefer magnétique progressif et au moins un bord à angle vif, chanfreiné ou arrondi.

De manière générale et conformément à un second mode de réalisation de l'invention, les pôles comportent une face courbe en son centre et dans au moins l'une desdites zones d'entrefer magnétique progressif et au moins un bord à angle vif, chanfreiné ou arrondi.

Pour rétablir l'entrefer aérodynamique constant, l'acier magnétique manquant est remplacé, conformément à l'invention, par une ou plusieurs pièces de coin 4, constituée en un matériau amagnétique approprié, tel par exemple l'acier inox austénitique, du fait de son faible coût, ou bien en alliage à base de nickel, de cuivre, d'aluminium ou de magnésium, ou encore en un matériau isolant.

Les pièces de coins 4 ainsi rapportées sur chaque bord tangentiel du pôle ont une forme générale de coins.

Ces pièces sont assemblées au pôle par soudage, collage ou collage et frettage, ou encore, en fonction du coût et des performances mécaniques souhaités, par assemblage mécanique classique, par exemple par boulonnage, rivetage, sertissage, queue d'aronde ou frettage.

Au lieu de rapporter des pièces de coin 4, il est possible et économique de recharger les pôles 1 dans la zone d'entrefer progressif, à l'arc électrique, avec un métal amagnétique.

Après l'assemblage entre eux, selon une méthode connue, des deux groupes de pôles constituant le bloc rotor et l'assemblage des pièces de coin sur les pôles, le bloc rotor est usiné au moyen d'un tour pour obtenir l'entrefer aérodynamique constant alors que l'entrefer magnétique est progressif.

Lorsque les pôles sont ainsi munis de pièces de coin sur leurs deux bords tangentiels, il peut être très avantageux d'utiliser ces pièces de coin, formant une structure monolithique avec le rotor, et de les compléter par deux autres pièces latérales, également soudées au rotor, dans le but de constituer une spire d'amortisseur autour de chaque pôle.

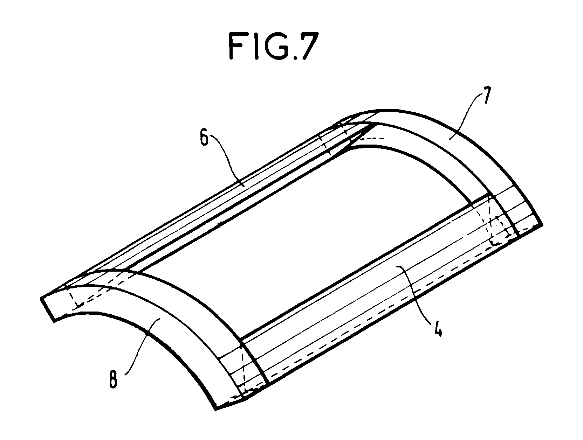

Une telle spire d'amortissement amagnétique et conductrice de l'électricité est par exemple représentée à la figure 7.

Le matériau des pièces de coin 4,6 et des pièces latérales 7,8 est un métal ayant une bonne conductivité électrique, par exemple en cuivre, en cuivre faiblement allié, en cuproaluminium ou en aluminium.

Les pièces latérales 7,8 disposées sur les bords axiaux des pôles sont soudées ou assemblées de la même manière que les pièces de coin 4,6, c'est à dire sur le métal constituant le pôle ou sur le métal amagnétique disposé en bout de la zone magnétiquement active et de part et d'autre du pôle.

La spire peut être, de façon préférentielle, une spire en une seule pièce soudée au pôle.

## Revendications

1. Rotor de machine synchrone comportant des pôles (1) et susceptible d'être associé à un stator, caractérisé en ce que lesdits pôles (1) dudit rotor sont tels qu'ils définissent avec ledit stator associé un entrefer magnétique progressif et un entrefer aérodynamique constant.

2. Rotor de machine synchrone selon la revendication 1 caractérisé par au moins une zone d'entrefer magnétique progressif en un matériau amagnétique.

3. Rotor de machine synchrone selon l'une quelconque des revendications 1 et 2 dans lequel les pôles (1) comportent une face (2) courbe en son centre et plane dans au moins l'une desdites zones d'entrefer magnétique progressif et au moins un bord (3) à angle vif.

4. Rotor de machine synchrone selon l'une quelconque des revendications 1 et 2 dans lequel les pôles (1) comportent une face (2) courbe en son centre et plane dans au moins l'une desdites zones d'entrefer magnétique progressif et au moins un bord (3) chanfreiné.

5. Rotor de machine synchrone selon l'une quelconque des revendications 1 et 2 dans lequel les pôles (1) comportent une face (2) courbe en son centre et plane dans au moins l'une desdites zones d'entrefer magnétique progressif et au moins un bord (3) arrondi.

6. Rotor de machine synchrone selon l'une quelconque des revendications 1 et 2 dans lequel les pôles (1) comportent une face (2) courbe en son centre et dans au moins l'une desdites zones d'entrefer magnétique progressif et au moins un bord (3) à angle vif.

7. Rotor de machine synchrone selon l'une quelconque des revendications 1 et 2 dans lequel les pôles (1) comportent une face (2) courbe en son centre et dans au moins l'une desdites zones d'entrefer magnétique progressif et au moins un bord (3) chanfreiné.

8. Rotor de machine synchrone selon l'une quelconque des revendications 1 et 2 dans lequel les pôles (1) comportent une face (2) courbe en son centre et dans au moins l'une desdites zones d'entrefer magnétique progressif et au moins un bord (3) arrondi.

9. Rotor de machine synchrone selon l'une quelconque des revendications 1 à 8 dans lequel les pièces de coin (4,6) sont complétées par des pièces latérales (7,8) de manière à constituer une spire d'amortissement en un matériau amagnétique et conducteur de l'électricité.

10. Rotor de machine synchrone selon l'une quelconque des revendications précédentes dans lequel l'entrefer magnétique progressif est réalisé sur un seul côté d'au moins un des pôles.

## Patentansprüche

1. Rotor einer Synchronmaschine, der Pole (1) aufweist und geeignet ist, einem Stator zugeordnet zu werden, dadurch gekennzeichnet, daß die Pole (1) des Rotors der Art sind, daß sie mit dem zugeordneten Stator einen progressiven Magnetspalt und einen konstanten aerodynamischen Spalt definieren.

2. Rotor für Synchronmaschinen nach Anspruch 1, gekennzeichnet durch wenigstens eine progressive Magnetspaltzone aus einem unmagnetischen Material.

3. Rotor für Synchronmaschinen nach einem der Ansprüche 1 und 2, bei dem die Pole (1) eine in ihrer Mitte gekrümmte und in wenigstens einer der Zonen mit progressivem Magnetspalt ebene Fläche (2) und wenigstens einen scharfkantigen Rand (3) aufweisen.

4. Rotor für Synchronmaschinen nach einem der Ansprüche 1 und 2, bei dem die Pole (1) eine in ihrer Mitte gekrümmte und in wenigstens einer der Zonen mit progressivem Magnetspalt ebene Fläche (2) und wenigstens einen gefasten Rand (3) aufweisen.

5. Rotor für Synchronmaschinen nach einem der Ansprüche 1 und 2, bei dem die Pole (1) eine in ihrer Mitte gekrümmte und in wenigstens einer der Zonen mit progressivem Magnetspalt ebene Fläche (2) und wenigstens einen abgerundeten Rand (3) aufweisen.

6. Rotor für Synchronmaschinen nach einem der Ansprüche 1 und 2, bei dem die Pole (1) eine in ihrer Mitte und in wenigstens einer der Zonen mit progressivem Magnetspalt gekrümmte Fläche (2) und wenigstens einen scharfkantigen Rand (3) aufweisen.

7. Rotor für Synchronmaschinen nach einem der Ansprüche 1 und 2, bei dem die Pole (1) eine in ihrer Mitte und in wenigstens einer der Zonen mit progressivem Magnetspalt gekrümmte Fläche (2) und wenigstens einen gefasten Rand (3) aufweisen.

8. Rotor für Synchronmaschinen nach einem der Ansprüche 1 und 2, bei dem die Pole (1) eine in ihrer Mitte und in wenigstens einer der Zonen mit progressivem Magnetspalt gekrümmte Fläche (2) und wenigstens einen abgerundeten Rand (3) aufweisen.

9. Rotor für Synchronmaschinen nach einem der Ansprüche 1 bis 8, bei dem die Eckstücke (4, 6) durch Seitenstücke (7, 8) vervollständigt sind, um eine Dämpfungswindung aus unmagnetischem und elektrisch leitendem Material zu bilden.

10. Rotor für Synchronmaschinen nach einem der vorhergehenden Ansprüche, bei dem der progressive Magnetspalt an einer einzigen Seite wenigstens eines der Pole gebildet ist.

## Claims

1. Synchronous machine rotor having poles (1) and adapted to be associated with a stator, characterised in that said poles (1) of said rotor define with the associated stator a progressive magnetic airgap and a constant aerodynamic airgap.

2. Synchronous machine rotor according to claim 1 characterised by at least one amagnetic material progressive magnetic airgap area.

3. Synchronous machine rotor according to claim 1 or claim 2 wherein the poles (1) include a curved surface (2) at the centre and a plane surface in at least one of said progressive magnetic airgap areas and at least one sharp edge (3).

4. Synchronous machine rotor according to claim 1 or claim 2 wherein the poles (1) include a curved surface (2) at the centre and a plane surface in at least one of said progressive magnetic airgap areas and at least one bevelled edge (3).

5. Synchronous machine rotor according to claim 1 or claim 2 wherein the poles (1) include a curved surface (2) at the centre and a plane surface in at least one of said progressive magnetic airgap areas and at least one rounded edge (3).

6. Synchronous machine rotor according to claim 1 or claim 2 wherein the poles (1) include a curved surface (2) at the centre and in at least one of said progressive magnetic airgap areas and at least one sharp edge (3).

7. Synchronous machine rotor according to claim 1 or claim 2 wherein the poles (1) include a curved surface (2) at the centre and in at least one of said progressive magnetic airgap areas and at least one bevelled edge (3).

8. Synchronous machine rotor according to claim 1 or claim 2 wherein the poles (1) include a curved surface (2) at the centre and in at least one of said progressive magnetic airgap areas and at least one rounded edge (3).

9. Synchronous machine rotor according to any one of claims 1 to 8 wherein the wedge members (4, 6) are complemented by lateral members (7, 8) to constitute an electrically conductive amagnetic material damper turn.

10. Synchronous machine rotor according to any one of the preceding claims wherein the progressive magnetic airgap is formed on one side only of at least one of the poles.
